(19) Europäisches Patentamt / European Patent Office / Office européen des brevets

(11) **EP 2 824 416 B1**

(12) **EUROPEAN PATENT SPECIFICATION**

(45) Date of publication and mention
of the grant of the patent:
**06.02.2019 Bulletin 2019/06**

(21) Application number: **13757353.1**

(22) Date of filing: **08.02.2013**

(51) Int Cl.:
*G01C 3/06* *(2006.01)*          *G01B 11/00* *(2006.01)*
*G06T 7/00* *(2017.01)*          *G01C 11/06* *(2006.01)*

(86) International application number:
**PCT/JP2013/052977**

(87) International publication number:
**WO 2013/132951 (12.09.2013 Gazette 2013/37)**

(54) **DISTANCE CALCULATION DEVICE AND DISTANCE CALCULATION METHOD**

DISTANZBERECHUNGSVORRICHTUNG UND DISTANZBERECHNUNGSVERFAHREN

DISPOSITIF DE CALCUL DE DISTANCE ET PROCÉDÉ DE CALCUL DE DISTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.03.2012 JP 2012052897**

(43) Date of publication of application:
**14.01.2015 Bulletin 2015/03**

(73) Proprietor: **Hitachi Automotive Systems, Ltd.
Hitachinaka-shi
Ibaraki 312-8503 (JP)**

(72) Inventors:
• **MATONO Haruki
Chiyoda-ku
Tokyo 100-8280 (JP)**
• **MITOMA Hiroto
Hitachinaka-shi
Ibaraki 312-8503 (JP)**

(74) Representative: **MERH-IP Matias Erny Reichl
Hoffmann
Patentanwälte PartG mbB
Paul-Heyse-Strasse 29
80336 München (DE)**

(56) References cited:
EP-A2- 1 933 167      JP-A- H0 843 055
JP-A- H1 047 954      JP-A- 2007 263 657
JP-A- 2008 008 687      JP-A- 2011 198 378
JP-A- 2012 123 296      US-A- 6 118 475

**Description**

Technical Field

The present invention relates to a distance calculator and a distance calculation method and relates, for example, to a distance calculator and a distance calculation method that are applied to an imaging system having a plurality of imaging means.

Background Art

A variety of safety systems have been made available to date to provide improved safety, for example, in automobile sector.

Recent years have seen the commercialization of a target detection system designed to detect a target such as pedestrians or vehicles using a plurality of stereo cameras or other types of cameras.

The above target detection system calculates the positional deviation (disparity) of the same target in a plurality of images captured at the same time by a plurality of cameras (imaging devices) based, for example, on template matching and calculates the position of the target in a real space based on the disparity and a known conversion formula, thus detecting the target.

A stereo camera-based target detection system such as the one described above designed to recognize a target by calculating distance to the target using a pair of images captured by a plurality of cameras (imaging devices) is applicable not only to the above vehicle safety system but also to a monitoring system adapted to detect entry of an intruder and anomalies.

A stereo camera-based target detection system applied to the above safety system and monitoring system captures images of a target with a plurality of cameras arranged with a given spacing provided therebetween and applies a triangulation technique to the pair of images captured by the plurality of cameras, thus calculating distance to the target.

More specifically, the target detection system includes, in general, at least two imaging devices (cameras) and a stereo image processing LSI (Large Scale Integration). The stereo image processing LSI applies a triangulation process to at least two captured images output from these imaging devices. The stereo image processing LSI performs arithmetic operations to superimpose pixel information included in the pair of images captured by the plurality of cameras and calculates the positional deviation (disparity) between the matching positions of the two captured images, thus performing the triangulation process. It should be noted that, in such a target detection system, each of the imaging devices must be adjusted to eliminate deviations in optical, signal and other characteristics between the imaging devices, and the distance between the imaging devices must be found precisely in advance, in order to ensure that there is no deviation other than disparity in the pair of images captured by the plurality of cameras.

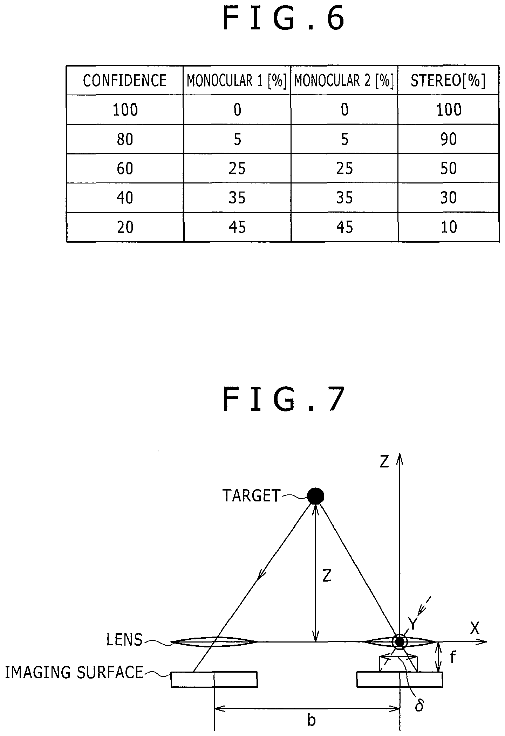

Fig. 7 describes the principle behind the stereo camera-based target detection system. In Fig. 7, $\sigma$ is the disparity (positional deviation between the matching positions of the pair of captured images), Z is the distance to the target to be measured, f is the focal distance of the imaging device, and b is the base line length (distance between the imaging devices). Formula (1) shown below holds between these parameters.

[Formula 1]

$$Z = b \cdot f / \sigma \qquad \cdots (1)$$

Incidentally, a stereo camera-based target detection system has a problem in that because the longer the distance to the target to be measured, the smaller the disparity $\sigma$, decline in the capability to calculate the disparity $\sigma$ results in lower accuracy in calculating distance to the target.

In order to solve such a problem, Patent Document 1 discloses a technology for merging stereo camera and monocular camera technologies to complement the drawbacks of the two technologies.

The three-dimensional coordinate acquisition device disclosed in Patent Document 1 calculates three-dimensional coordinates of a target from images captured by monocular and stereo cameras so as to simply switch between the two calculation results or combining the two results. Further, when combining the two calculation results, this device changes the weights of the results in accordance with the distances from the cameras to the target, the vehicle speed, the number of flows, and the accuracy.

In US 6 118 475 A, an apparatus is arranged to have two cameras set at a predetermined angle of convergence, image motion vector extracting portions and the stereoscopic parallax extracting portion and a portion for obtaining final motion vectors or distance information from the motion vectors extracted by the respective motion vector extracting portions.

In EP 1 933 167 A2, a sensor and a method for obtaining a distance of an object is described. Based on a first measurement principle and a second measurement principle a comparison is conducted such as to determine the reliability of the determined three dimensional picture from the first and the second three dimensional picture.

Prior Art Documents

Patent Document

Patent Document 1: JP-2007-263657-A

Summary of the Invention

Problem to be Solved by the Invention

The three-dimensional coordinate acquisition device disclosed in Patent Document 1 uses images captured by monocular and stereo cameras. This makes it possible to measure the distance to the target in each of monocular and stereo camera areas. This also makes it possible to provide improved accuracy in calculating the distance to the target by assigning weights to the three-dimensional coordinates of the target calculated from the images captured by the monocular and stereo cameras in accordance with the distance to the target, the vehicle speed, and other factors.

In the three-dimensional coordinate acquisition device disclosed in Patent Document 1, however, no mention is made of how the weights are distributed. Further, if the reliability of the image captured by each of the cameras declines, the accuracy of the distances to the target measured from the images captured by the monocular and stereo cameras declines.

The present invention has been devised in light of the foregoing, and it is an object of the present invention to provide a distance calculator and a distance calculation method capable of measuring a distance with disparity resolution of a stereo camera or less and precisely measuring a relative distance to a target even in the event of decline in reliability of an image captured by each camera.

Means for Solving the Problem

In order to solve the above problem, the features of the independent claims are suggested. Preferred developments are in the dependent claims. A distance calculator according to the present invention is provided in the appended independent apparatus claim 1.

A distance calculation method according the present invention is provided in the appended independent method claim 4.

Effect of the Invention

According to the distance calculator and the distance calculation method of the present invention, an imaging system having a plurality of imaging devices can measure a distance with disparity resolution of a stereo camera or less and can precisely measure a relative distance to a target even in the event of decline in reliability of an image captured by each camera.

Problems, configuration and effects other than those described above will become apparent by the description of a preferred embodiment given below.

Brief Description of the Drawings

Fig. 1 is an overall configuration diagram schematically illustrating an imaging system to which a first example of a distance calculator in relation to the present invention is applied.

Fig. 2 is an internal configuration diagram illustrating the internal configuration of the distance calculator of the first example illustrated in Fig. 1.

Fig. 3 is a diagram describing a method of calculating the distance to a target using a monocular camera.

Fig. 4 is a diagram illustrating an example of a weight table tailored to a confidence used by an output distance calculation section illustrated in Fig. 2.

Fig. 5 is an internal configuration diagram illustrating the internal configuration of an embodiment of the distance calculator according to the present invention.
Fig. 6 is a diagram illustrating an example of a weight table tailored to a confidence used by the output distance calculation section illustrated in Fig. 5.
Fig. 7 is a diagram describing the principle behind a stereo camera-based target detection system.

Modes for Carrying Out the Invention

A description will be given below of an embodiment of the distance calculator and the distance calculation method according to the present invention with reference to the accompanying drawings.

[First Example]

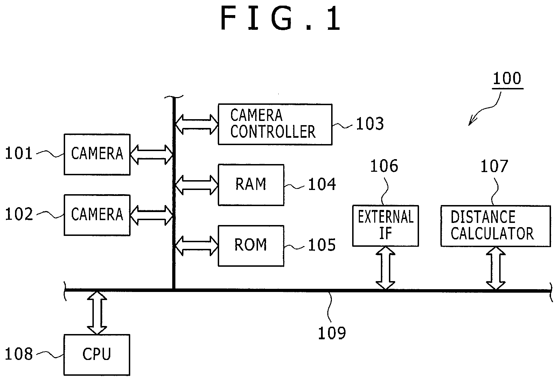

Fig. 1 schematically illustrates an imaging system to which a first example of a distance calculator in relation to the present invention is applied.
An imaging system 100 illustrated in Fig. 1 primarily includes two cameras (imaging devices) 101 and 102, a camera controller 103, a RAM 104, a ROM 105, an external IF 106, a distance calculator 107, and a CPU 108. The cameras 101 and 102 are arranged with a given spacing therebetween. The camera controller 103 controls the cameras 101 and 102. The RAM 104 is a temporary storage area adapted to store, for example, images captured by the cameras 101 and 102. The ROM 105 stores programs and a variety of initial values. The external IF 106 is a communication means adapted to notify the recognition conditions of the cameras to control systems such as brakes and to the user. The distance calculator 107 calculates the distance to a target. The CPU 108 controls this system as a whole. These components can exchange information with each other via a bus 109. That is, the imaging system 100 is capable of stereo camera-based distance measurement to a target by using the two cameras 101 and 102.
It should be noted that each of the cameras 101 and 102 includes an imaging element such as CCD (Charge Coupled Device Image Sensor) or CMOS (Complementary Metal Oxide Semiconductor) sensor. The cameras 101 and 102 are controlled by the camera controller 103 to capture images at the same time. Further, the cameras 101 and 102 are controlled to have the same exposure settings in order to ensure that the brightness levels are the same when matching points are searched for in images captured by the cameras 101 and 102.

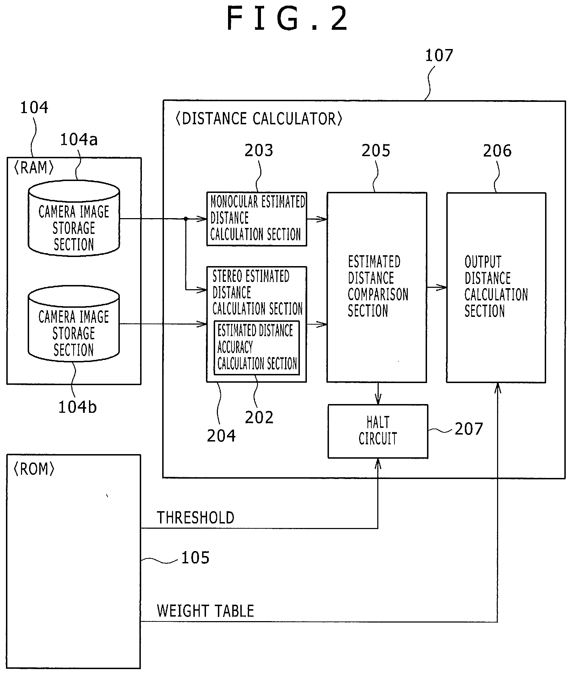

Fig. 2 illustrates the internal configuration of the distance calculator of the first example illustrated in Fig. 1. It should be noted that the images captured by the cameras 101 and 102 are temporarily stored respectively in camera image storage sections 104a and 104b of the RAM 104.
The distance calculator 107 illustrated in Fig. 2 primarily includes a monocular estimated distance calculation section (first estimated distance calculation section) 203, a stereo estimated distance calculation section (second estimated distance calculation section) 204, an estimated distance comparison section 205, an output distance calculation section 206, and a HALT circuit 207.
The monocular estimated distance calculation section 203 calculates the estimated distance to a target (first estimated distance) based on image information captured by the camera 101 and stored in the camera image storage section 104a, transmitting the calculation result to the estimated distance comparison section 205.
Any of hitherto known techniques can be used to calculate the estimated distance. One among such techniques is calculation using vehicle width. More specifically, a vehicle area (position on the screen) is calculated from image information obtained from the camera image storage section 104a through pattern matching. Here, the term "pattern matching" refers to an approach that calculates the correlation value of a captured image's brightness level and considers a brightness level equal to or greater than a given level as a "vehicle", and determines that area to be a "vehicle area." This makes it possible to calculate the vehicle width from image information obtained from the camera image storage section 104a. As a result, assuming that the image capturing direction of the camera and the rear face of the vehicle are approximately perpendicular to each other, it is possible to readily calculate the approximate distance to the vehicle, a target, from the assumed width of the vehicle.

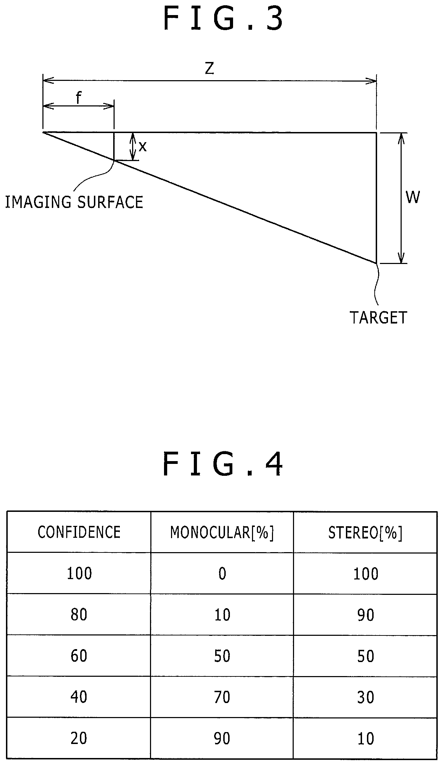

Fig. 3 describes a method of calculating the distance to a target using the camera 101. In Fig. 3, W is the width of a preceding vehicle, Z is the distance to the preceding vehicle, x is the vehicle width on the imaging surface, and f is the focal distance of the camera 101. The relationship represented by formula (2) shown below holds between these parameters. This makes it possible to calculate the distance W to the preceding vehicle.

[Formula 2]

$$Z = W \cdot f / x \qquad \cdots (2)$$

However, the monocular estimated distance calculation section 203 may not be able to accurately calculate the distance to the preceding vehicle if the image capturing direction of the camera and the rear face of the vehicle are not approximately perpendicular to each other, for example, when the vehicle is on a sloped or curved road surface. Further, because the distance to the preceding vehicle is calculated using, for example, an assumed vehicle width, an error may occur in the calculated distance to the vehicle if the width of the vehicle, a target, is unknown.

For this reason, the stereo estimated distance calculation section 204 illustrated in Fig. 2 calculates the estimated distance to a target (second estimated distance) based on pieces of image information, one captured by the camera 101 and stored in the camera image storage section 104a and another captured by the camera 102 and stored in the camera image storage section 104b. More specifically, the disparity is calculated by searching for matching pixels from image information obtained from the camera image storage sections 104a and 104b, after which the estimated distance to the target is calculated (refer to Fig. 7). The calculation result thereof is transmitted to the estimated distance comparison section 205.

Still more specifically, the SAD (Sum of the Absolute Difference) calculation method, for example, is used to search for matching points between two images captured by the cameras 101 and 102 in order to calculate the disparity. Using a specific portion of one of the images as a template, a matching position is searched for in the other image, followed by the calculation of the sum of the absolute differences of the brightness levels of the pixels. The position with the smallest sum is considered the highest correlating position and therefore determined to be the matching position. As a result, the positional deviation between the two images can be considered disparity. Here, the vertical positions of the two images are registered with each other in advance (this is referred to as "paralleling") for efficient processing by hardware. Using a specific portion of one of the images the size of which is about four pixels by four pixels, the other image is searched only horizontally. An image created by performing this task over the entire image is referred to as a "range image." Next, in order to detect the vehicle, a target, from the "range images" prepared as described above, a plane is searched for which is at the same distance from the group of "range images." If the width of the target on that plane is apparently that of a vehicle, a search is made assuming that the target is a "vehicle." Then, the mean value of the distances in a plurality of "vehicle" areas detected as described above is calculated so as to calculate the distance to the vehicle, a target.

Further, the stereo estimated distance calculation section 204 includes an estimated distance accuracy calculation section 202. The same section 202 calculates the extent of variation (dispersion) of the disparity value between the "vehicle" areas detected by the above method and outputs the calculation result to the output distance calculation section 206 as a confidence of the stereo estimated distance calculation section 204. It should be noted that the estimated distance accuracy calculation section 202 may calculate the extent of blurriness of the captured image as a whole (contrast level is used, for example, as a judgment criterion) and use the calculation result thereof as a confidence of the stereo estimated distance calculation section 204. Meanwhile, if the "range image" is set to a fixed size such as four pixels by four pixels for efficient processing by hardware, the background is included in the boundary between the vehicle position and the four-by-four pixels. This makes it more likely that an error may occur in the distance to the target. In particular, if the target is located at a distance, the smaller the disparity, the smaller the vehicle size. Therefore, the error of the distance to the target will probably become even larger. For this reason, the estimated distance accuracy calculation section 202 may specify a confidence using the estimated distance to the target calculated by the stereo estimated distance calculation section 204 so that, for example, the confidence is large when the distance to the target is small, and that the confidence is small when the distance to the target is large. It should be noted that the confidence is normalized to a range from 0 to 100.

Here, it is desirable that the calculation results obtained by the monocular estimated distance calculation section 203 and the stereo estimated distance calculation section 204 are the same. However, the two calculation results are not necessarily the same, for example, because of the difference in calculation method.

For this reason, the estimated distance comparison section 205 that has received the calculation results from the monocular estimated distance calculation section 203 and the stereo estimated distance calculation section 204 compares the two estimated distances calculated by the monocular estimated distance calculation section 203 and the stereo estimated distance calculation section 204 to determine whether the distance measurement is invalid. Then, if the difference between the estimated distances obtained from the monocular estimated distance calculation section 203 and the stereo estimated distance calculation section 204 is equal to or greater than a given threshold, the estimated distance comparison section 205 notifies the HALT circuit 207 that an anomaly has occurred. It should be noted that the given threshold is stored in advance in the ROM 105 and is transmitted to the estimated distance comparison section 205 as necessary.

On the other hand, the output distance calculation section 206 calculates the distance to be output (final distance) which will be output to control systems such as brakes, indicators and other systems if the difference between the estimated distances obtained from the monocular estimated distance calculation section 203 and the stereo estimated distance calculation section 204 is smaller than the given threshold. The output distance calculation section 206 calculates the distance to be output based not only on the estimated distances obtained from the monocular estimated distance calculation section 203 and the stereo estimated distance calculation section 204 but also on the confidence of the stereo estimated distance calculation section 204 calculated by the estimated distance accuracy calculation section 202. At this time, the output distance calculation section 206 calculates the distance to be output using a weight table tailored to the confidence stored in advance in the ROM 105.

Fig. 4 illustrates an example of a weight table tailored to a confidence used by the output distance calculation section 206 illustrated in Fig. 2. In Fig. 4, "Monocular" represents the weight (usage rate) of the estimated distance (monocular estimated distance) calculated by the monocular estimated distance calculation section 203. "Stereo" represents the weight of the estimated distance (stereo estimated distance) calculated by the stereo estimated distance calculation section 204.

For example, if the confidence of the stereo estimated distance calculation section 204 is 80, the output distance calculation section 206 can calculate the distance to be output (final distance) based on formula (3) shown below.

[Formula 3]

$$\text{Distance to be output} = (\text{Monocular estimated distance} \times 0.1) + (\text{Stereo estimated distance} \times 0.9)$$

$$\cdots(3)$$

It should be noted that the median of the confidence shown in Fig. 4 can be linearly interpolated from the values previous to and following the median.

Such a configuration allows for stably accurate measurement of the distance to a target, be the distance to the target long or short, even in the event of decline in distance measurement accuracy of the stereo estimated distance calculation section 204 due, for example, to variation in disparity or blurriness of the image as a whole.

It should be noted that if there is a large difference between the estimated distances obtained from the monocular estimated distance calculation section 203 and the stereo estimated distance calculation section 204, it is highly likely that the camera lenses may be stained, that the measurement may be difficult to achieve due to bad weather, or that the camera sensor may be faulty. Upon receipt of an anomaly signal from the estimated distance comparison section 205, therefore, the HALT circuit 207 transmits a stop signal to the output distance calculation section 206, thus stopping the distance calculation and halting the system. Further, the HALT circuit 207 notifies the user that the system is not properly functional, thus preventing possible malfunction.

[Embodiment]

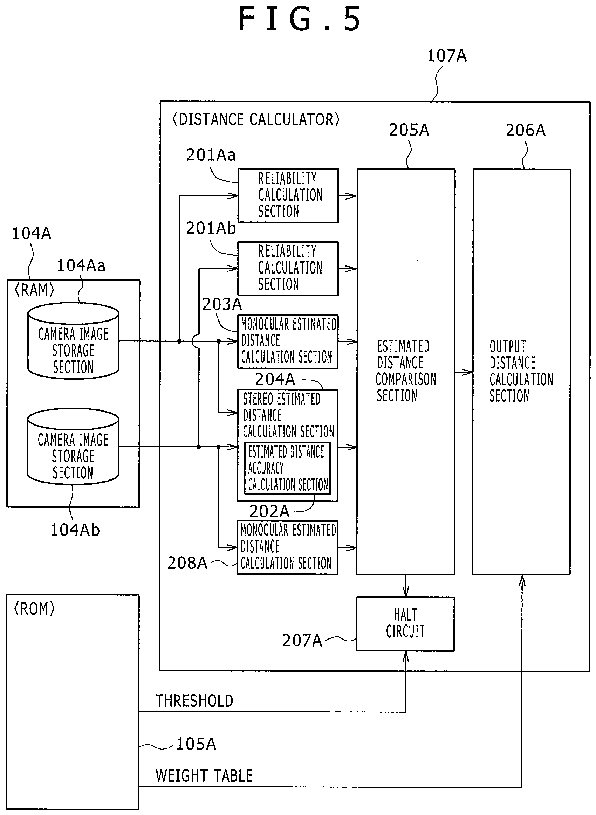

Fig. 5 illustrates the internal configuration of an embodiment of the distance calculator according to the present invention. A distance calculator 107A of the embodiment illustrated in Fig. 5 differs from the distance calculator 107 of the first example illustrated in Fig. 2 in that the same calculator 107A calculates the reliability of a camera image captured by each camera by analyzing the image. The distance calculator 107A is roughly identical to the distance calculator 107 in other components. Therefore, like components to those of the same calculator 107 will be denoted by like reference numerals, and a detailed description thereof will be omitted.

The distance calculator 107A illustrated in Fig. 5 includes a monocular estimated distance calculation section (first estimated distance calculation section) 203A, a stereo estimated distance calculation section (second estimated distance calculation section) 204A, an estimated distance comparison section 205A, an output distance calculation section 206A, and an HALT circuit 207A. The distance calculator 107A also includes a monocular estimated distance calculation section (first estimated distance calculation section) 208A and reliability calculation sections 201Aa and 201Ab. The monocular estimated distance calculation section 208A calculates the estimated distance (first estimated distance) to a target based on image information captured by the camera 102 (refer to Fig. 1) and stored in a camera image storage section 104Ab. The reliability calculation sections 201Aa and 201Ab calculate the reliabilities of camera images by analyzing image information stored in the camera image storage sections 104Aa and 104Ab.

The monocular estimated distance calculation section 208A performs calculations similar to those performed by the monocular estimated distance calculation section 203, calculating the estimated distance to a target based on image information stored in the camera image storage section 104Ab and transmitting the calculation result to the estimated distance comparison section 205A.

Meanwhile, the reliability calculation sections 201Aa and 201Ab analyze the details of the images stored respectively in the camera image storage sections 104Aa and 104Ab, calculating the reliabilities and transmitting the calculation results to the estimated distance comparison section 205A. The reliability indicates whether the distance to the target can be measured with high accuracy from each camera image.

A variety of reliability calculation methods can be used by the reliability calculation sections 201Aa and 201Ab. As an example thereof, the image contrast is calculated. If the calculated contrast is low, the reliability is reduced. If the calculated contrast is high, the reliability is increased. Alternatively, the image capturing condition of each camera may be used as the reliability by detecting raindrops, dirt, and so on.

The estimated distance comparison section 205A compares the estimated distances, one calculated by the monocular estimated distance calculation section 203A or 208A and another calculated by the stereo estimated distance calculation section 204A based not only on the estimated distance (monocular estimated distance) transmitted from the monocular estimated distance calculation section 203A or 208A and the estimated distance transmitted from the stereo estimated distance calculation section 204A but also on the reliabilities transmitted from the reliability calculation sections 201Aa and 201Ab. More specifically, the estimated distance comparison section 205A selects the monocular estimated distance calculation section that calculated the estimated distance to the target based on a highly reliable camera image, comparing the estimated distance transmitted from that monocular estimated distance calculation section and the estimated distance transmitted from the stereo estimated distance calculation section 204A. Then, if the difference between the estimated distances obtained from the monocular estimated distance calculation section and the stereo estimated distance calculation section 204A is equal to or greater than a given threshold, the estimated distance comparison section 205A notifies the HALT circuit 207A that an anomaly has occurred as in the first example.

It should be noted that the estimated distance comparison section 205A may combine the calculation results obtained from the monocular estimated distance calculation sections 203A and 208A in accordance with the ratio of reliability between the camera images stored in the camera image storage sections 104Aa and 104Ab rather than selecting the monocular estimated distance calculation section that calculated the estimated distance to the target based on a highly reliable camera image. This ensures that switching occurs frequently between the monocular estimated distance calculation sections 203A and 208A during distance measurement, keeping unstable calculation results of monocular estimated distance to a minimum.

If the difference between the estimated distances obtained from the monocular estimated distance calculation section 203 and the stereo estimated distance calculation section 204 is smaller than the given threshold, the output distance calculation section 206A calculates the distance to be output (final distance) which will be output to control systems such as brakes, indicators and other systems based not only on the estimated distance transmitted from the monocular estimated distance calculation section 203A or 208A and the estimated distance transmitted from the stereo estimated distance calculation section 204A but also on the confidence of the stereo estimated distance calculation section 204 calculated by an estimated distance accuracy calculation section 202 and the reliabilities transmitted from the reliability calculation sections 201Aa and 201Ab. At this time, the output distance calculation section 206A calculates the distance to be output using a weight table tailored to the confidence stored in advance in a ROM 105A.

Fig. 6 illustrates an example of a weight table tailored to a confidence used by the output distance calculation section 206A illustrated in Fig. 5. In Fig. 6, "Monocular 1" represents the weight (usage rate) of the estimated distance (monocular estimated distance) calculated by the monocular estimated distance calculation section 203A. "Monocular 2" represents the weight of the estimated distance calculated by the monocular estimated distance calculation section 208A. "Stereo" represents the weight of the estimated distance (stereo estimated distance) calculated by the stereo estimated distance calculation section 204A.

As illustrated in Fig. 6, in the embodiment, the relative distance to a target is calculated by assigning weights to the two estimated distances calculated by the monocular estimated distance calculation sections 203A and 208A and to the estimated distance calculated by the stereo estimated distance calculation section 204A in accordance with a confidence.

More specifically, if, for example, the confidence of the stereo estimated distance calculation section 204A is low, the weights of the estimated distances calculated by the monocular estimated distance calculation sections 203A and 208A are increased. As a result, the distance measurement is handled primarily by the monocular cameras, thus allowing for stably precise calculation of the distance to a target. At this time, even in the event of decline in distance measurement accuracy of one of the two cameras due, for example, to dirt, raindrops, and so on, the distance measurement using two monocular cameras in combination provides improved robustness against adverse conditions such as dirt and raindrops. On the other hand, if the confidence of the stereo estimated distance calculation section 204A is high, the weight of the estimated distance calculated by the stereo estimated distance calculation section 204A is increased. As a result, the distance measurement is handled primarily by the stereo camera, thus allowing for stably precise calculation of the distance to a target.

Meanwhile, a case has been described in the illustrated example in which the weights represented by "Monocular 1" and "Monocular 2" are the same for each of the confidences of the stereo estimated distance calculation section 204A. However, the weights of the estimated distances calculated by the monocular estimated distance calculation sections 203A and 208A may be calculated based on the reliabilities of the camera images stored in the camera image storage sections 104Aa and 104Ab so as to change the weights of the estimated distances calculated by the monocular estimated distance calculation sections 203A and 208A in accordance with the reliabilities of the camera images. For example, if one of the cameras is stained, for example, by dirt or raindrops, the confidence of the stereo estimated distance calculation section 204A declines, and at the same time, the reliability of the camera image captured by the one of the cameras also declines. However, the reliability of the camera image captured by the camera which is not stained is maintained unchanged. Therefore, it is possible to provide even higher robustness against adverse conditions such as dirt and raindrops by increasing the weight of the monocular estimated distance calculated based on the camera image captured by the camera which is not stained.

It should be noted that although a case has been described in the first example and the embodiment described above in which two cameras (imaging devices) are used, the number of imaging devices may be changed as appropriate so long as at least two imaging devices are available, and the distance to a target can be measured with a stereo camera.

Note also that some or all of the aforementioned components, functions, processors, and the like can be implemented by hardware such as an integrated circuit or the like. Alternatively, those components, functions, and the like can be implemented by software as well. In the latter case, a processor can interpret and execute the programs designed to serve those functions. The programs, associated data tables, files, and the like can be stored on a stationary storage device such as a memory, a hard disk, and a solid state drive (SSD) or on a portable storage medium such as an integrated circuit card (ICC), an SD card, and a DVD.

Further note that the control lines and information lines shown above represent only those lines necessary to illustrate the present invention, not necessarily representing all the lines required in terms of products. Thus, it can be assumed that almost all the components are in fact interconnected.

Description of the Reference Numerals

100: Imaging system
101, 102: Cameras (imaging devices)
103: Camera controller
104: RAM
104a, 104b: Camera image storage sections
105: ROM
106: External IF
107: Distance calculator
108: CPU
109: Bus
202: Estimated distance accuracy calculation section
203: Monocular estimated distance calculation section (first estimated distance calculation section)
204: Stereo estimated distance calculation section (second estimated distance calculation section)
205: Estimated distance comparison section
206: Output distance calculation section
207: HALT circuit

Claims

1.  A distance calculator for an imaging system having a plurality of imaging devices (101, 102), the distance calculator (107) comprising:

    a first estimated distance calculation section (203) adapted to calculate an estimated distance to a target based on an image captured by one of the plurality of imaging devices (101, 102);
    an additional first estimated distance calculation section (208A) associated with one of the plurality of imaging devices which is different from the imaging device associated with the first estimated distance calculation section (203), wherein the additional first estimated distance calculation section (208A) is adapted to perform calculations similar to those performed by the first estimated distance calculation section (203);
    a second estimated distance calculation section (204) adapted to calculate an estimated distance to the target based on images captured by the two imaging devices (101, 102) associated with the first estimated distance calculation section (203) and the additional first estimated distance calculation section (208A), wherein the second estimated distance calculation section (204) includes an estimated distance accuracy calculation section (202);

two reliability calculation sections (201Aa, 201Ab) adapted to analyze details of the images captured respectively by the two imaging devices (101, 102) and stored respectively in two respective camera image storage sections (104Aa, 104Ab) and adapted to calculate reliabilities of the images and to transmit the result to an estimated distance comparison section (205); and

an output distance calculation section (206) adapted to calculate a distance to the target to be output, wherein the output distance calculation section (206) is adapted to calculate the distance to be output based on a first estimated distance calculated by the first estimated distance calculation section (203), an additional first estimated distance calculated by the additional first estimated distance calculation section (208A), a second estimated distance calculated by the second estimated distance calculation section (204), and weights of the first, additional first, and second estimated distances, the weights being determined in accordance with a confidence calculated by the estimated distance accuracy calculation section (202) of the second estimated distance calculation section (204), the confidence being calculated based on images captured by the two imaging devices (101, 102), **characterized in that**

the confidence is calculated based on at least one of the extent of variation of a disparity value of the target in the images captured by the two imaging devices (101, 102), the disparity value being a positional deviation between matching positions of a pair of the images captured by the two imaging devices (101, 102), the extent of blurriness of the images captured by the two imaging devices (101, 102), and the estimated distance to the target calculated based on the images captured by the two imaging devices (101, 102), wherein the confidence is specified using the estimated distance of the second estimated distance calculation section (204) so that the confidence is large, when the distance to the target is small and the confidence is small, when the distance to the target is large, the distance calculator further comprising

a HALT circuit (207) for halting the system, wherein the estimated distance comparison section (205) is adapted to receive the estimated distances from the first estimated distance calculation section (203), the additional first estimated distance calculation section (208A), and the second estimated distance calculation section (204) and to combine the calculation results obtained from the first estimated distance calculation section (203) and the additional first estimated distance calculation section (208A) in accordance with a ratio of reliabilities between the camera images stored in the camera image storage sections, and wherein the estimated distance comparison section (205) is adapted to compare the combined calculation results and the estimated distance of the second estimated distance calculation section (204), to determine if the difference between the estimated distances is equal to or greater than a given threshold and to notify the HALT circuit (207) that an anomaly has occurred if the difference between the estimated distances is equal or greater than the given threshold.

2. The distance calculator of claim 1, wherein
the weights of the first and additional first estimated distances are the same.

3. The distance calculator of claim 1, wherein
the weight of each of the first and additional first estimated distances is calculated based on the reliability of each of the images used by the first and the additional first estimated distance calculation sections (203, 208A), wherein the reliability of the image is calculated based on
the image contrast, so that if the calculated contrast is low, the reliability is reduced, and if the calculated contrast is high, the reliability is increased, or wherein the reliability of the image is calculated based on the image capturing condition of each camera by detecting raindrops or dirt.

4. A distance calculation method of an imaging system having a plurality of imaging devices (101, 102), the distance calculation method comprising:

calculating a first estimated distance to a target based on an image captured by one of the plurality of imaging devices (101) by a first estimated distance calculation section (203),
calculating by an additional first estimated distance calculation section (208A) an additional first estimated distance to the target based on an image captured by one of the plurality of imaging devices which is different from the imaging device associated with the first estimated distance calculation section (203),
calculating by a second estimated distance calculation section (204) a second estimated distance to the target based on images captured by the two imaging devices (101, 102) associated with the first and additional first estimated distance calculation sections (203, 208A); analyzing details of the images captured respectively by the two imaging devices (101, 102) and stored respectively in two respective camera image storage sections (104Aa, 104Ab),
calculating reliabilities of the images, and transmitting said reliabilities to an estimated distance comparison section (205); and

calculating a distance to the target to be output based on the first, additional first and second estimated distances and weights of the first, additional first and second estimated distances, the weights being determined in accordance with a confidence, the confidence being calculated based on images captured by the two imaging devices (101, 102), **characterized in that** the confidence is calculated by an estimated distance accuracy calculation section (202) of the second estimated distance calculation section (204) based on at least one of the extent of variation of a disparity value of the target in the images captured by the two imaging devices (101, 102), the disparity value being a positional deviation between matching positions of a pair of the images captured by the two imaging devices (101, 102), the extent of blurriness of the images captured by the two imaging devices (101, 102), and estimated distance to the target calculated based on the images captured by the two imaging devices (101, 102), wherein the confidence is specified using the second estimated distance of the second estimated distance calculation section (204) so that the confidence is large, when the distance to the target is small and the confidence is small, when the distance to the target is large,

combining the calculation results obtained from the first and additional first estimated distance calculation sections (203, 208A) in accordance with the ratio of reliability between camera images stored in the camera image storage sections (104Aa, 104Ab), and comparing the combined calculation result and the second estimated distance of the second estimated distance calculation section (204) by the estimated distance comparison section (205), to determine if the difference between the estimated differences is equal to or greater than a given threshold and to notify that an anomaly has occurred if the difference between the estimated distances is equal or greater than the given threshold.

## Patentansprüche

1. Abstandsrechner für ein Bildgebungssystem, das mehrere Bilderzeugungseinrichtungen (101, 102) besitzt, wobei der Abstandsrechner (107) Folgendes enthält:

einen Berechnungsabschnitt (203) für eine erste geschätzte Entfernung, der ausgelegt ist, eine geschätzte Entfernung zu einem Ziel auf der Grundlage eines Bildes, das durch eine der mehreren Bilderzeugungseinrichtungen (101, 102) aufgenommen wurde, zu berechnen;

einen Berechnungsabschnitt (208A) für eine zusätzliche erste geschätzte Entfernung, der einer der mehreren Bilderzeugungseinrichtungen, die von der Bilderzeugungseinrichtung, die dem Berechnungsabschnitt (203) für eine erste geschätzte Entfernung zugeordnet ist, verschieden ist, zugeordnet ist, wobei der Berechnungsabschnitt (208A) für eine zusätzliche erste geschätzte Entfernung ausgelegt ist, Berechnungen, die denen, die durch den Berechnungsabschnitt (203) für eine erste geschätzte Entfernung durchgeführt werden, ähnlich sind, durchzuführen;

einen Berechnungsabschnitt (204) für eine zweite geschätzte Entfernung, der ausgelegt ist, eine geschätzte Entfernung zum Ziel auf der Grundlage von Bildern, die durch die zwei Bilderzeugungseinrichtungen (101, 102), die dem Berechnungsabschnitt (203) für eine erste geschätzte Entfernung und dem Berechnungsabschnitt (208A) für eine zusätzliche erste geschätzte Entfernung zugeordnet sind, aufgenommen wurden, zu berechnen, wobei der Berechnungsabschnitt (204) für eine zweite geschätzte Entfernung einen Berechnungsabschnitt (202) für die Genauigkeit der geschätzten Entfernung enthält;

zwei Verlässlichkeitsberechnungsabschnitte (201Aa, 201Ab), die ausgelegt sind, Details der Bilder, die jeweils durch die zwei Bilderzeugungseinrichtungen (101, 102) aufgenommen wurden und jeweils in zwei entsprechenden Kamerabildspeicherabschnitten (104Aa, 104Ab) gespeichert wurden, zu analysieren, und ausgelegt sind, die Verlässlichkeiten der Bilder zu berechnen und das Ergebnis zu einem Vergleichsabschnitt (205) für eine geschätzte Entfernung zu senden; und

einen Ausgangsentfernungsberechnungsabschnitt (206), der ausgelegt ist, eine auszugebende Entfernung zum Ziel zu berechnen, wobei

der Ausgangsentfernungsberechnungsabschnitt (206) ausgelegt ist, die auszugebende Entfernung auf der Grundlage einer ersten geschätzten Entfernung, die durch den Berechnungsabschnitt (203) für eine erste geschätzte Entfernung berechnet wurde, einer zusätzlichen ersten geschätzten Entfernung, die durch den Berechnungsabschnitt (208A) für eine zusätzliche erste geschätzte Entfernung berechnet wurde, einer zweiten geschätzten Entfernung, die durch den Berechnungsabschnitt (204) für eine zweite geschätzte Entfernung berechnet wurde, und Gewichten der ersten, der zusätzlichen ersten und der zweiten geschätzten Entfernung zu berechnen, wobei die Gewichte gemäß einer Konfidenz, die durch den Berechnungsabschnitt (202) für die Genauigkeit der geschätzten Entfernung des Berechnungsabschnittes (204) für eine zweite geschätzte Entfernung, bestimmt wird, berechnet werden, wobei die Konfidenz auf der Grundlage von Bildern, die durch die zwei Bilderzeugungseinrichtungen (101, 102) aufgenommen wurden, berechnet wird, **dadurch gekennzeichnet,**

**dass**

die Konfidenz auf der Grundlage des Ausmaßes einer Variation eines Disparitätswertes des Ziels in den Bildern, die durch die zwei Bilderzeugungseinrichtungen (101, 102) aufgenommen wurden, wobei der Disparitätswert eine Positionsabweichung zwischen übereinstimmenden Positionen eines Paares der Bilder, die durch die zwei Bilderzeugungseinrichtungen (101, 102) aufgenommen wurden, ist, des Ausmaßes der Unschärfe der Bilder, die durch die zwei Bilderzeugungseinrichtungen (101, 102) aufgenommen wurden, und/oder der geschätzten Entfernung zum Ziel, die auf der Grundlage der Bilder, die durch die zwei Bilderzeugungseinrichtungen (101, 102) aufgenommen wurden, berechnet wird, berechnet wird, wobei die Konfidenz unter Verwendung der geschätzten Entfernung des Berechnungsabschnittes (204) für eine zweite geschätzte Entfernung derart festgelegt wird, dass die Konfidenz groß ist, wenn die Entfernung zum Ziel klein ist, und die Konfidenz klein ist, wenn die Entfernung zum Ziel groß ist, wobei der Entfernungsrechner ferner Folgendes enthält:

eine STOPP-Schaltung (207), um das System anzuhalten, wobei der Vergleichsabschnitt (205) für eine geschätzte Entfernung ausgelegt ist, die geschätzten Entfernungen vom Berechnungsabschnitt (203) für eine erste geschätzte Entfernung, vom Berechnungsabschnitt (208A) für eine zusätzliche erste geschätzte Entfernung und vom Berechnungsabschnitt (204) für eine zweite geschätzte Entfernung zu empfangen und die Berechnungsergebnisse, die vom Berechnungsabschnitt (203) für eine erste geschätzte Entfernung und vom Berechnungsabschnitt (208A) für eine zusätzliche erste geschätzte Entfernung erhalten wurden, in Übereinstimmung mit einem Verhältnis von Verlässlichkeiten zwischen den Kamerabildern, die in den Kamerabildspeicherabschnitten gespeichert sind, zu kombinieren, und der Vergleichsabschnitt (205) für eine geschätzte Entfernung ausgelegt ist, die kombinierten Berechnungsergebnisse und die geschätzte Entfernung des Berechnungsabschnitts (204) für eine zweite geschätzte Entfernung zu vergleichen, um zu bestimmen, ob die Differenz zwischen den geschätzten Entfernungen gleich oder größer als ein gegebener Schwellenwert ist, und die STOPP-Schaltung (207) zu informieren, dass eine Anomalie aufgetreten ist, wenn die Differenz zwischen den geschätzten Entfernungen gleich oder größer als der gegebene Schwellenwert ist.

2. Abstandsrechner nach Anspruch 1, wobei
die Gewichte der ersten und der zusätzlichen ersten geschätzten Entfernung dieselben sind.

3. Abstandsrechner nach Anspruch 1, wobei
die Gewichte jeweils der ersten und der zusätzlichen ersten geschätzten Entfernung auf der Grundlage der Verlässlichkeit von jedem der Bilder, die durch die Berechnungsabschnitte (203, 208A) für eine erste und eine zusätzliche erste geschätzte Entfernung verwendet werden, berechnet werden, wobei die Verlässlichkeit des Bildes auf der Grundlage des Bildkontrasts derart berechnet wird, dass dann, wenn der berechnete Kontrast gering ist, die Verlässlichkeit verringert wird, und dann, wenn der berechnete Kontrast hoch ist, die Verlässlichkeit erhöht wird, oder wobei die Verlässlichkeit des Bildes auf der Grundlage der Bildaufnahmebedingung von jeder Kamera durch Detektieren von Regentropfen oder Schmutz berechnet wird.

4. Abstandsberechnungsverfahren eines Bilderzeugungssystems, das mehrere Bilderzeugungseinrichtungen (101, 102) besitzt, wobei das Abstandsberechnungsverfahren Folgendes umfasst:

Berechnen einer ersten geschätzten Entfernung zu einem Ziel auf der Grundlage eines Bildes, das durch eine der mehreren Bilderzeugungseinrichtungen (101) aufgenommen wurde, durch einen Berechnungsabschnitt (203) für eine erste geschätzte Entfernung,
Berechnen durch einen Berechnungsabschnitt (208A) für eine zusätzliche erste geschätzte Entfernung einer zusätzlichen ersten geschätzten Entfernung zum Ziel auf der Grundlage eines Bildes, das durch eine der mehreren Bilderzeugungseinrichtungen, die von der Bilderzeugungseinrichtung, die dem Berechnungsabschnitt (203) für eine erste geschätzte Entfernung zugeordnet ist, verschieden ist, aufgenommen wurde,
Berechnen durch einen Berechnungsabschnitt (204) für eine zweite geschätzte Entfernung einer zweiten geschätzten Entfernung zum Ziel auf der Grundlage von Bildern, die durch die zwei Bilderzeugungseinrichtungen (101, 102), die den Berechnungsabschnitten (203, 208A) für eine erste und eine zusätzliche erste geschätzte Entfernung zugeordnet sind, aufgenommen wurden;
Analysieren von Details der Bilder, die jeweils durch die zwei Bilderzeugungseinrichtungen (101, 102) aufgenommen wurden und jeweils in zwei entsprechenden Kamerabildspeicherabschnitten (104Aa, 104Ab) gespeichert wurden;
Berechnen von Verlässlichkeiten der Bilder und Senden der Verlässlichkeiten zu einem Vergleichsabschnitt (205) für eine geschätzte Entfernung;
Berechnen einer auszugebenden Entfernung zum Ziel auf der Grundlage der ersten, der zusätzlichen ersten und der zweiten geschätzten Entfernung und von Gewichten der ersten, der zusätzlichen ersten und der zweiten geschätzten Entfernung, wobei die Gewichte gemäß einer Konfidenz bestimmt werden, wobei die Konfidenz auf der Grundlage von Bildern, die durch die zwei Bilderzeugungseinrichtungen (101, 102) aufgenommen wurden, berechnet wird, **dadurch gekennzeichnet, dass**

die Konfidenz durch einen Berechnungsabschnitt (202) für die Genauigkeit der geschätzten Entfernung des Berechnungsabschnittes (204) für eine zweite geschätzte Entfernung auf der Grundlage des Ausmaßes einer Variation eines Disparitätswertes des Ziels in den Bildern, die durch die zwei Bilderzeugungseinrichtungen (101, 102) aufgenommen wurden, wobei der Disparitätswert eine Positionsabweichung zwischen übereinstimmenden Positionen eines Paares der Bilder, die durch die zwei Bilderzeugungseinrichtungen (101, 102) aufgenommen wurden, ist, des Ausmaßes der Unschärfe der Bilder, die durch die zwei Bilderzeugungseinrichtungen (101, 102) aufgenommen wurden, und/oder der geschätzten Entfernung zum Ziel, die auf der Grundlage der Bilder, die durch die zwei Bilderzeugungseinrichtungen (101, 102) aufgenommen wurden, berechnet wird, berechnet wird, wobei die Konfidenz unter Verwendung der geschätzten Entfernung des Berechnungsabschnittes (204) für eine zweite geschätzte Entfernung derart festgelegt wird, dass die Konfidenz groß ist, wenn die Entfernung zum Ziel klein ist, und die Konfidenz klein ist, wenn die Entfernung zum Ziel groß ist,

Kombinieren der Berechnungsergebnisse, die von den Berechnungsabschnitten (203, 208A) für eine erste und eine zusätzliche erste geschätzte Entfernung erhalten wurden, in Übereinstimmung mit dem Verhältnis von Verlässlichkeiten zwischen Kamerabildern, die in den Kamerabildspeicherabschnitten (104Aa, 104Ab) gespeichert sind, und Vergleichen der kombinierten Berechnungsergebnisse und der geschätzten Entfernung des Berechnungsabschnitts (204) für eine zweite geschätzte Entfernung durch den Vergleichsabschnitt (205) für eine geschätzte Entfernung, um zu bestimmen, ob die Differenz zwischen den geschätzten Entfernungen gleich oder größer als ein gegebener Schwellenwert ist, und zu informieren, dass eine Anomalie aufgetreten ist, wenn die Differenz zwischen den geschätzten Entfernungen gleich oder größer als der gegebene Schwellenwert ist.

## Revendications

1.  Calculateur de distance pour un système d'imagerie comportant une pluralité de dispositifs d'imagerie (101, 102), le calculateur de distance (107) comprenant :

    une première section de calcul de distance estimée (203) adaptée à calculer une distance estimée à une cible sur la base d'une image capturée par l'un de la pluralité de dispositifs d'imagerie (101, 102) ;
    une première section de calcul de distance estimée supplémentaire (208A) associée à l'un de la pluralité de dispositifs d'imagerie qui est différente du dispositif d'imagerie associé à la première section de calcul de distance estimée (203), la première section de calcul de distance estimée supplémentaire (208A) étant adaptée à effectuer des calculs similaires à ceux effectués par la première section de calcul de distance estimée (203) ;
    une deuxième section de calcul de distance estimée (204) adaptée à calculer une distance estimée à la cible sur la base d'images capturées par les deux dispositifs d'imagerie (101, 102) associés à la première section de calcul de distance estimée (203) et à la première section de calcul de distance estimée supplémentaire (208A), dans lequel la deuxième section de calcul de distance estimée (204) inclut une section de calcul de précision de distance estimée (202) ;
    deux sections de calcul de fiabilité (201Aa, 201Ab) adaptées à analyser des détails des images capturées respectivement par les deux dispositifs d'imagerie (101, 102) et stockées respectivement dans deux sections de stockage d'images de caméra respectives (104Aa, 104Ab) et adaptées à calculer des fiabilités des images et à transmettre le résultat à une section de comparaison de distances estimées (205) ; et
    une section de calcul de distance de sortie (206) adaptée à calculer une distance à la cible à délivrer, la section de calcul de distance de sortie (206) étant adaptée à calculer la distance à délivrer sur la base d'une première distance estimée calculée par la première section de calcul de distance estimée (203), d'une première distance estimée supplémentaire calculée par la première section de calcul de distance estimée supplémentaire (208A), d'une deuxième distance estimée calculée par la deuxième section de calcul de distance estimée (204) et de pondérations de la première distance estimée, de la première distance estimée supplémentaire et de la deuxième distance estimée, les pondérations étant déterminées en fonction d'une confiance calculée par la section de calcul de précision de distance estimée (202) de la deuxième section de calcul de distance estimée (204), la confiance étant calculée sur la base d'images capturées par les deux dispositifs d'imagerie (101, 102), **caractérisé en ce que**
    la confiance est calculée sur la base d'au moins une valeur parmi le degré de variation d'une valeur de disparité de la cible dans les images capturées par les deux dispositifs d'imagerie (101, 102), la valeur de disparité étant un écart positionnel entre des positions correspondantes d'une paire des images capturées par les deux dispositifs d'imagerie (101, 102), le degré de flou des images capturées par les deux dispositifs d'imagerie (101, 102) et la distance estimée à la cible calculée sur la base des images capturées par les deux dispositifs d'imagerie (101, 102), la confiance étant spécifiée en utilisant la distance estimée de la deuxième section de calcul de distance estimée (204) de telle sorte que la confiance est grande lorsque la distance à la cible est faible et la confiance est faible lorsque la distance à la cible est grande, le calculateur de distance comprenant en outre un circuit d'arrêt (207) pour arrêter le système, la section de comparaison de distances estimées (205) étant adaptée à recevoir les distances estimées de la première section de calcul de distance estimée (203), de la première section de calcul de distance estimée supplémentaire (208A) et de la deuxième section de calcul de distance estimée (204) et à combiner les résultats de calcul obtenus de la première section de calcul de distance estimée (203) et de la première section de calcul de distance estimée supplémentaire (208A) en fonction d'un rapport de fiabilité entre les images de caméra stockées dans les sections de stockage d'images de caméra, et la section de comparaison de distances estimées (205) étant adaptée à comparer les résultats de calcul combinés et la distance estimée de la deuxième section de calcul de distance estimée (204), à déterminer si la différence entre les distances estimées est égale ou supérieure à un seuil donné et à notifier au circuit d'arrêt (207) qu'une anomalie est survenue si la différence entre les distances estimées est égale ou supérieure au seuil donné.

2.  Calculateur de distance selon la revendication 1, dans lequel les pondérations de la première distance estimée et de la première distance estimée supplémentaire sont identiques.

3.  Calculateur de distance selon la revendication 1, dans lequel la pondération de chacune de la première distance estimée et de la première distance estimée supplémentaire est calculée sur la base de la fiabilité de chacune des images utilisées par la première section de calcul de distance estimée (203) et la première section de calcul de distance estimée supplémentaire (208A), la fiabilité de l'image étant calculée sur la base du contraste de l'image, de sorte que si le contraste calculé est faible, la fiabilité est réduite et si le contraste calculé est élevé, la fiabilité est augmentée, ou la fiabilité de l'image étant calculée sur la base des conditions de capture de chaque caméra par la détection de gouttes de pluie ou de poussière.

4.  Procédé de calcul de distance d'un système d'imagerie comportant une pluralité de dispositifs d'imagerie (101, 102), le procédé de calcul de distance comprenant les étapes consistant à :

    calculer une première distance estimée à une cible sur la base d'une image capturée par l'un de la pluralité de dispositifs d'imagerie (101) par une première section de calcul de distance estimée (203),
    calculer, par une première section de calcul de distance estimée supplémentaire (208A), une première distance estimée supplémentaire à la cible sur la base d'une image capturée par l'un de la pluralité de dispositifs d'imagerie qui est différent du dispositif d'imagerie associé à la première section de calcul de distance estimée (203),
    calculer, par une deuxième section de calcul de distance estimée (204), une deuxième distance estimée à la cible sur la base d'images capturées par les deux dispositifs d'imagerie (101, 102) associés à la première section de calcul de distance estimée (203) et à la première section de calcul de distance estimée supplémentaire (208A) ;
    analyser des détails des images capturées respectivement par les deux dispositifs d'imagerie (101, 102) et stockées respectivement dans deux sections de stockage d'images de caméra respectives (104Aa, 104Ab), calculer des fiabilités des images, et
    transmettre lesdites fiabilités à une section de comparaison de distances estimées (205) ; et
    calculer une distance à la cible à délivrer sur la base de la première distance estimée, de la première distance estimée supplémentaire, de la deuxième distance estimée et de pondérations de la première distance estimée, de la première distance estimée supplémentaire et de la deuxième distance estimée, les pondérations étant déterminées en fonction d'une confiance, la confiance étant calculée sur la base d'images capturées par les deux dispositifs (101, 102) d'imagerie,
    **caractérisé en ce que** la confiance est calculée par une section de calcul de précision de distance estimée (202) de la deuxième section de calcul de distance estimée (204) sur la base d'au moins une valeur parmi le degré de variation d'une valeur de disparité de la cible dans les images capturées par les deux dispositifs d'imagerie (101, 102), la valeur de disparité étant un écart positionnel entre des positions correspondantes d'une paire des images capturées par les deux dispositifs d'imagerie (101, 102), le degré de flou des images capturées par les deux dispositifs d'imagerie (101, 102) et la distance estimée à la cible calculée sur la base des images capturées par les deux dispositifs d'imagerie (101, 102), la confiance étant spécifiée en utilisant la deuxième distance estimée de la deuxième section de calcul de distance estimée (204) de telle sorte que la confiance est grande lorsque la distance à la cible est faible et la confiance est faible lorsque la distance à la cible est grande,

et **caractérisé par** les étapes consistant à combiner les résultats obtenus de la première section de calcul de distance estimée (203) et de la première section de calcul de distance estimée supplémentaire (208A) en fonction du rapport de fiabilité entre les images de caméra stockées dans les sections de stockage d'images de caméra (104Aa, 104Ab), et à comparer le résultat de calcul combiné et la deuxième distance estimée de la deuxième section de calcul de distance estimée (204) par la section de comparaison de distances estimées (205) pour déterminer si la différence entre les différences estimées est égale ou supérieure à un seuil donné et pour notifier qu'une anomalie est survenue si la différence entre les distances estimées est égale ou supérieure au seuil donné.

# FIG.1

# F I G . 2

# FIG.3

IMAGING SURFACE

TARGET

# FIG.4

| CONFIDENCE | MONOCULAR[%] | STEREO[%] |
|:---:|:---:|:---:|
| 100 | 0 | 100 |
| 80 | 10 | 90 |
| 60 | 50 | 50 |
| 40 | 70 | 30 |
| 20 | 90 | 10 |

# FIG.5

107A

⟨DISTANCE CALCULATOR⟩

205A

206A

201Aa
RELIABILITY CALCULATION SECTION

201Ab
RELIABILITY CALCULATION SECTION

203A
MONOCULAR ESTIMATED DISTANCE CALCULATION SECTION

204A
STEREO ESTIMATED DISTANCE CALCULATION SECTION

ESTIMATED DISTANCE ACCURACY CALCULATION SECTION

202A

208A
MONOCULAR ESTIMATED DISTANCE CALCULATION SECTION

ESTIMATED DISTANCE COMPARISON SECTION

OUTPUT DISTANCE CALCULATION SECTION

104A

104Aa

⟨RAM⟩

CAMERA IMAGE STORAGE SECTION

CAMERA IMAGE STORAGE SECTION

104Ab

⟨ROM⟩

HALT CIRCUIT

207A

THRESHOLD

105A

WEIGHT TABLE

# F I G . 6

| CONFIDENCE | MONOCULAR 1 [%] | MONOCULAR 2 [%] | STEREO[%] |
|---|---|---|---|
| 100 | 0 | 0 | 100 |
| 80 | 5 | 5 | 90 |
| 60 | 25 | 25 | 50 |
| 40 | 35 | 35 | 30 |
| 20 | 45 | 45 | 10 |

# F I G . 7

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6118475 A
- EP 1933167 A2

- JP 2007263657 A